# EUROPEAN PATENT APPLICATION

(11) **EP 4 732 977 A1**
(43) Date of publication of application: **29.04.2026**
(21) Application number: 25210498.9
(22) Date of filing: 22.10.2025
(51) Int. Cl.: B23D 47/04, B25J 15/04, B27M 1/08, B23Q 7/05

(54) **METHOD AND MACHINE FOR CUTTING AND/OR PROCESSING PROFILES, IN PARTICULAR MADE OF ALUMINUM, LIGHT ALLOYS, PVC OR SIMILAR**

(30) Priority: 22.10.2024 IT 202400023523
(71) Applicant: F.O.M. Industrie S.r.l., 47841 Cattolica (IT)
(72) Inventor: MURATORI, Marco, 47841 CATTOLICA (RN) (IT)
(74) Representative: Studio Torta S.p.A.

(57) **Abstract**

A machine for cutting and/or processing section bars (2) made of aluminium, light alloys, PVC or the like has at least one processing station (11, 12) provided with at least one operating head (33, 36) configured to cut and/or process the section bars (2), a feeding unit (19) provided with a holding member (25) to feed a section bar (2) through the processing station (11, 12), and a pushing plate (27) to feed at least one section bar (2) through the processing station (11, 12); the holding member (25) and the pushing plate (27) being movable relative to one another in a position of transfer of the pushing plate (27) to the holding member (25).

## Description

### CROSS-REFERENCE TO RELATED APPLICATIONS

This patent application claims priority from Italian patent application no. 102024000023523 filed on October 22, 2024, the entire disclosure of which is incorporated herein by reference.

### TECHNICAL FIELD

This invention relates to a machine for cutting and/or processing section bars, in particular made of aluminium, light alloys, PVC or the like.

### BACKGROUND

In the field of cutting and processing section bars made of aluminium, light alloy, PVC or the like, it is known to provide a machine of the type comprising an elongated base extending in a first horizontal direction; a cutting station formed along the base and provided with a cutting head to separate at least one component from a section bar; and a processing station formed along the base and provided with an operating head to process the section bar and/or component.

The machine also comprises a feeding device configured to hold a rear end of the section bar and feed it through the processing station and cutting station in the first direction; a loading station to feed the section bars to the feeding device in a second horizontal direction transverse to the first direction; and an unloading station to unload the components from the machine in the second direction.

The feeding device comprises a first horizontal slide movable along the base in the first direction, a second horizontal slide coupled to the first horizontal slide to perform, with respect to the first horizontal slide, straight movements in the second direction, and a vertical slide coupled to the second horizontal slide to perform, with respect to the second horizontal slide, straight movements in a third vertical direction orthogonal to the above-mentioned first and second directions.

The vertical slide has an elongated shape, projects from the second horizontal slide in the first direction and supports a holding member connected to a free end of the vertical slide.

The holding member is rotatably coupled to the vertical slide to rotate, with respect to the vertical slide, about a rotation axis parallel to the first direction, and comprises two jaws, which are movable between a section bar clamping position and a release position.

Known machines for cutting and/or processing section bars of the type described above have certain drawbacks, mainly resulting from the fact that the feeding through the processing station and the cutting station of a group of at least two section bars or a section bar configured in such a way that it cannot be gripped by the holding member requires the replacement of the holding member with a pushing plate and thus relatively high set-up times.

### SUMMARY

The object of this invention is to provide a machine for cutting and/or processing section bars, in particular made of aluminium, light alloys, PVC or the like, which is without the previously described drawbacks and which is cheap and easy to implement.

According to this invention, a machine for cutting and/or processing section bars, in particular made of aluminium, light alloys, PVC or the like, is provided, as claimed in claims 1 to 8.

This invention also relates to a method for cutting and/or processing section bars, in particular made of aluminium, light alloys, PVC or the like.

According to this invention, a method for cutting and/or processing section bars, in particular made of aluminium, light alloys, PVC or the like, is provided, as claimed in claims 9 to 12.

### BRIEF DESCRIPTION OF THE DRAWINGS

This invention will now be described with reference to the accompanying drawings, which show a non-limiting embodiment thereof, wherein:
Figure 1 is a schematic perspective view, with parts removed for clarity, of a preferred embodiment of the machine for cutting and/or processing section bars of the present invention;
Figure 2 is a schematic perspective view, with parts removed for clarity, of a detail of the machine in Figure 1; and
Figures 3 and 4 are two schematic perspective views, with parts removed for clarity, of a detail of Figure 2 shown in two different operating positions.

### DESCRIPTION OF EMBODIMENTS

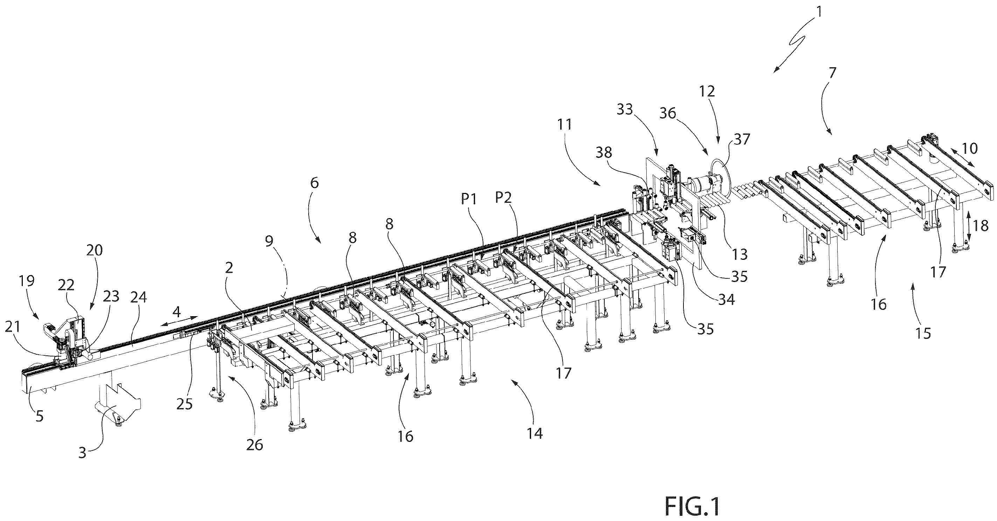

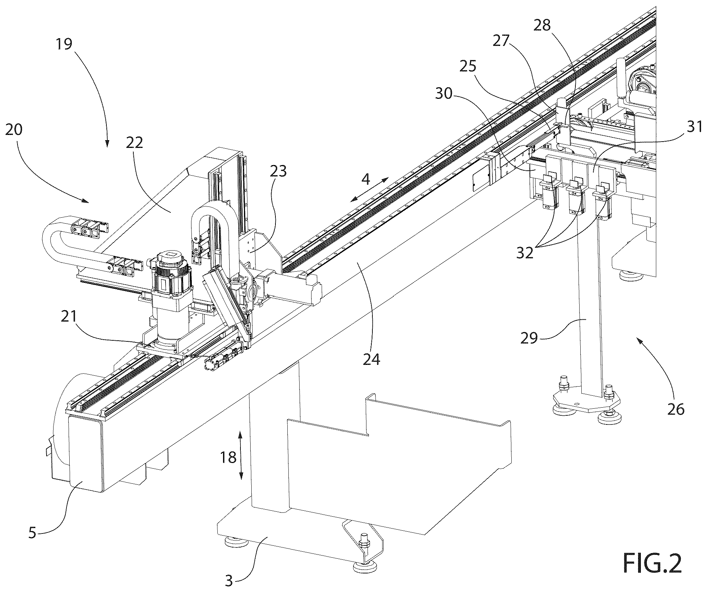

With reference to Figures 1 and 2, the reference number 1 denotes, as a whole, a machine for cutting and processing section bars 2 made of aluminium, light alloys, PVC or the like with an elongated shape.

The machine 1 comprises an elongated base 3, which extends in a horizontal direction 4, and is provided with a longitudinal guide rail 5 parallel to the direction 4.

The machine 1 further comprises two roller support devices 6, 7 mounted in series along the base 3.

Each device 6, 7 has a plurality of lower rollers 8, which are mounted to rotate about respective rotation axes 9 substantially parallel to one another and to a horizontal direction 10 transversal to the direction 4, and they define a lower support surface P1.

The machine 1 also has a processing station 11 to process the section bars 2, and a cutting station 12 to separate at least one component (not shown) from each section bar 2.

The stations 11 and 12 are arranged in succession along the base 3, are mounted between the devices 6 and 7, and are associated with a roller support device 13 connected to the devices 6 and 7.

Obviously, the stations 11 and 12 can be eliminated and replaced with a single processing and/or cutting station to process and/or cut the section bars 2.

The machine 1 is also provided with a loading station 14 for loading the section bars 2 on the device 6 and an unloading station 15 for unloading the components (not illustrated) from the device 7.

Each station 14, 15 comprises a belt conveyor 16, facing the corresponding device 6, 7 in the direction 10, and comprises, in turn, a plurality of conveying belts 17, which are parallel to one another and to the direction 10, and define a lower support plane P2.

The rollers 8 are mobile in a vertical direction 18 that is orthogonal to the directions 4 and 10 between a raised operating position, wherein the surface P1 extends above the surface P2, and a lowered rest position, wherein the surface P1 extends below the surface P2.

The section bars 2 are fed by a feeding unit 19 along the plane P1 of the device 6 and through the stations 11 and 12 in the direction 4.

The unit 19 comprises a carriage 20 comprising, in turn, a first horizontal slide 21 coupled in a sliding manner to the rail 5 to make straight movements along the rail 5 in the direction 4, with respect to the base 3; a second horizontal slide 22 coupled in a sliding manner to the horizontal slide 21 to make straight movements in the direction 10, with respect to the horizontal slide 21; and a vertical slide 23 coupled in a sliding manner to the horizontal slide 22 to make straight movements in the direction 18, with respect to the horizontal slide 22.

The vertical slide 23 supports a support arm 24, which has an elongated shape, projects from the vertical slide 23 parallel to the direction 4, and supports a holding member 25 connected to a free end of the arm 24.

The member 25 is rotatably coupled to the arm 24 to rotate, with respect to the arm 24, about a rotation axis (not shown) parallel to the direction 4, and comprises two jaws (not shown), which are movable between a section bar 2 clamping position and a release position.

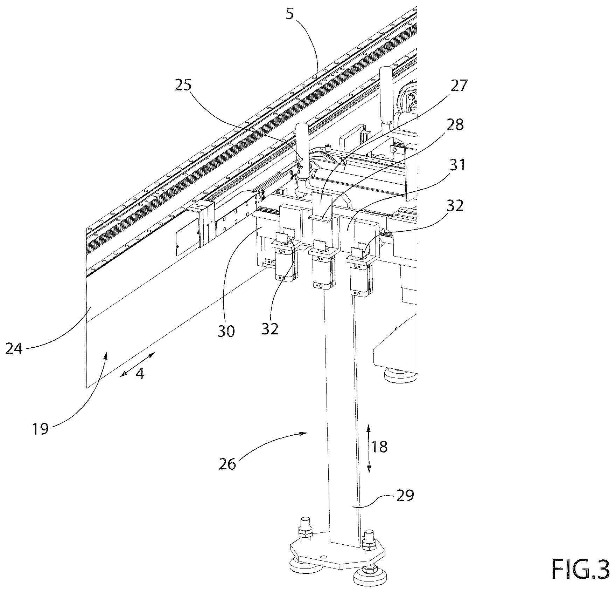

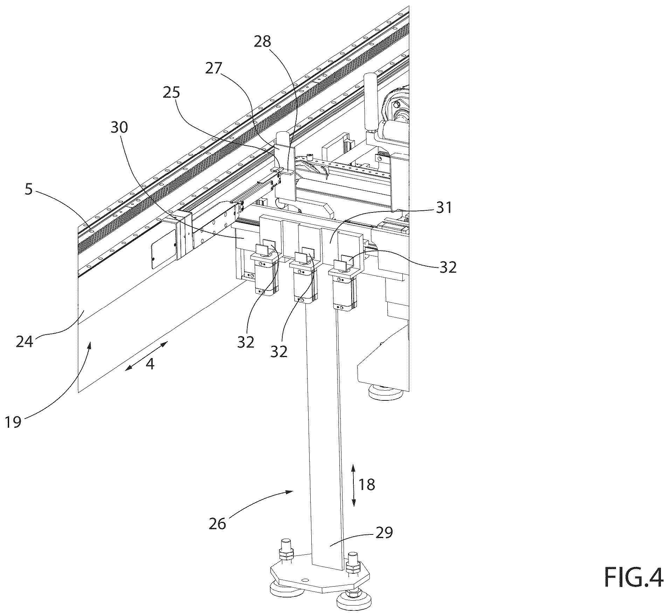

According to what is shown in Figures 3 and 4, the machine 1 also comprises a store 26 for a plurality of pushing plates 27 (in this case, three pushing plates 27), each of which is provided with a gripping bracket 28, and is configured to feed a group of at least two section bars 2 or a section bar 2 configured to prevent it from being gripped by the member 25 along the plane P1 in the direction 4.

The store 26 comprises a vertical upright 29, which extends upwards in the direction 18, and carries attached, at one of its upper free ends, a horizontal crossbar 30 parallel to the direction 10.

The crossbar 30 is engaged in a sliding manner by a slide 31, which is movable along the crossbar 30 in the direction 10, and is provided with a plurality of pockets 32 each configured to receive and hold a respective plate 27.

The processing station 11 is provided with a known operating head 33 comprising an annular frame 34, which extends around a section bar 2 feeding path in the direction 4, and supports a plurality of electrospindles 35 mounted on the frame 34 parallel to the directions 10 and 18.

The cutting station 12 is provided with a cutting head 36 of a known type comprising a cutting blade 37 mounted to rotate about a rotation axis (not shown) and to be oriented about at least one rotation axis (not shown) parallel to the directions 4 and/or 10 and/or 18.

The stations 11, 12 are also provided with at least one clamping vice 38 configured to hold the section bars 2 and/or components (not shown) separated from the section bars 2.

In use, the individual section bars 2 are gripped by the jaws (not shown) of the holding member 25 and fed through the stations 11, 12 in the direction 4.

In order to advance through the stations 11, 12 groups of at least two section bars 2, the holding member 25 and the pushing plates 27 are moved relative to each other in the directions 4 and/or 10 and/or 18 in a transfer position, in which the jaws (not shown) of the holding member 25 grip the bracket 28 of a plate 27 to pick it up from the store 26 or release the bracket 28 of the plate 27 to release it into the store 26.

In the example shown in Figures 3 and 4, the member 25 is moved to the transfer position by the horizontal slides 21 and/or 22 and/or by the vertical slide 23 in the directions 4 and/or 10 and/or 18.

According to a variant not shown, the plates 27 are moved by a transfer device between the transfer position and a storage position of the plates 27 in the store 26.

The machine 1 has certain advantages mainly resulting from the fact that the feeding of groups of at least two section bars 2 through the stations 11, 12 only involves the gripping of a pushing plate 27 via the member 25 and, therefore, relatively short feeding unit 19 set-up times.

In addition, the presence of the store 26 enables the use of different pushing plates 27.

## Claims

1. A machine for cutting and/or processing section bars (2), in particular made of aluminium, light alloys, PVC or the like, the machine comprising an elongated base (3) extending in a first horizontal direction (4); at least one processing station (11, 12) obtained along the base (3) and provided with at least one operating head (33, 36) to cut and/or process the section bars (2); and a feeding unit (19) provided with a holding member (25) to feed a section bar (2) along the base (3) and through the processing station (11, 12) in the first direction (4); and being **characterized in that** it further comprises at least one pushing plate (27) to feed at least one section bar (2) in the first direction (4); the holding member (25) and the pushing plate (27) being movable relative to one another in a position of transfer of the pushing plate (27) to/from said holding member (25).

2. The machine according to claim 1, wherein the pushing plate (27) is provided with gripping means (28) configured to be held by the holding member (25).

3. The machine according to claim 1 or 2, wherein the pushing plate (27) is movable between the transfer position and a position of storage of the pushing plate (27).

4. The machine according to claim 3 and further comprising a transfer device to move the pushing plate (27) between said transfer and storage positions.

5. The machine according to claim 1 or 2, wherein the feeding unit (19) comprises a carriage (20) movable along the base (3) in the first direction (4) and configured to move the holding member (25) from and to the transfer position.

6. The machine according to any one of the preceding claims, wherein the feeding unit (19) further comprises an elongated support arm (24), which is mounted on the carriage (20) and extends in the first direction (4); the holding member (25) being connected to a free end of the support arm (24) .

7. The machine according to any one of the preceding claims and further comprising a store (26) for a plurality of pushing plates (27).

8. The machine according to any one of the preceding claims, wherein the holding member (25) is configured to receive and hold the pushing plate (27), in particular it comprises two jaws, which are movable between a clamping position and a release position.

9. A method for cutting and/or processing section bars (2), in particular made of aluminium, light alloys, PVC or the like, in a machine comprising an elongated base (3) extending in a first horizontal direction (4); at least one processing station (11, 12) obtained along the base (3) and provided with at least one operating head (33, 36) to cut and/or process the section bars (2); and a feeding unit (19) provided with a holding member (25) to feed a section bar (2) along the base (3) and through the processing station (11, 12) in the first direction (4); the method being **characterized in that** it comprises the steps of:
moving the holding member (25) and a pushing plate (27) relative to one another in a position of transfer of the pushing plate (27) to the holding member (25);
gripping the pushing plate (27) by means of the holding member (25) ; and
moving the feeding unit (19) and the pushing plate (27) in the first direction (4) in order to move at least one section bar (2) through the processing station (11, 12).

10. The method according to claim 9 and further comprising the step of:
moving the pushing plate (27) between the transfer position and a position of storage of the pushing plate (27).

11. The method according to claim 9 and further comprising the step of:
moving the holding member (25) to the transfer position.

12. The method according to any one of the claims from 9 to 11 and further comprising the step of:
gripping the pushing plate (27) from a plurality of pushing plates (27) housed in a store (26).
